(19)

Europäisches Patentamt
European Patent Office
Office européen des brevets

(11)  **EP 4 343 885 A1**

(12)  **EUROPEAN PATENT APPLICATION**
published in accordance with Art. 153(4) EPC

(43)  Date of publication:
**27.03.2024  Bulletin 2024/13**

(21)  Application number: **22804594.4**

(22)  Date of filing: **13.05.2022**

(51)  International Patent Classification (IPC):
*H01M 4/14* (2006.01)        *D04H 1/4218* (2012.01)
*D04H 1/4382* (2012.01)        *D04H 1/542* (2012.01)
*H01M 4/20* (2006.01)

(52)  Cooperative Patent Classification (CPC):
**D04H 1/4218; D04H 1/4382; D04H 1/542;**
**H01M 4/14; H01M 4/20;** Y02E 60/10

(86)  International application number:
**PCT/JP2022/020140**

(87)  International publication number:
**WO 2022/244681 (24.11.2022 Gazette 2022/47)**

(84)  Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30)  Priority:  **19.05.2021   JP 2021084580**

(71)  Applicant: **ENTEK Asia Inc**
**Fuwa-gun,**
**Gifu 5032121 (JP)**

(72)  Inventors:
 • **MORI Keita**
  **Fuwa-gun, Gifu 503-2121 (JP)**
 • **SUGIYAMA Shoji**
  **Fuwa-gun, Gifu 503-2121 (JP)**

(74)  Representative: **Körfer, Thomas**
**Mitscherlich PartmbB**
**Patent- und Rechtsanwälte**
**Karlstraße 7**
**80333 München (DE)**

(54)  **NONWOVEN FABRIC FOR LEAD ACID STORAGE BATTERIES, SAID NONWOVEN FABRIC USING GLASS FIBERS AND THERMALLY ADHESIVE BINDER FIBERS**

(57)  [Problem] To provide a nonwoven fabric (pasting mat) that does not undergo bonding between the nonwoven fabrics (pasting mats) even under severe conditions (a pressure in winding and a high temperature and a high humidity in transportation, storage, and production).

  [Means for Resolution] A pasting mat for lead acid batteries, containing a microglass fiber and a heat-fusible binder fiber, wherein the pasting mat has a thickness under a pressure of 20 kPa of 0.02 mm or more and less than 0.1 mm, and has a bonding strength between the pasting mats after being left for 48 hours under a pressure of 5 to 10 kPa in an environment of a temperature of 70 to 90°C and a humidity of 75% of less than 0.05 N.

**EP 4 343 885 A1**

**Description**

Technical Field

The present invention relates to improvement of nonwoven fabrics to be used for lead acid batteries. More particularly, the present invention relates to resolution of a problem, involved in battery production, of a nonwoven fabric (pasting mat) using a microglass fiber and a heat-fusible binder fiber.

Background Art

In a conventional lead acid battery for automobiles, an electrolyte is agitated by gas generated through electrolysis of water in a state of full charge, leading to mixing the electrolyte to thus maintain a uniform specific gravity of the electrolyte in the battery.

However, in a lead acid battery for automobiles in recent years, with the spread of the idling start-stop system (hereinafter referred to as ISS), the use state of the battery has been such that the electric power is not used only for starting the engine as before, but also is supplied to an electrical system in stopping the engine besides in starting the engine, and thus charging-discharging cycles are performed more frequently than before.

At the same time, since the battery is always not in a state of full charge, mixing of the electrolyte by gas generated through electrolysis does not occur and a difference occurs in the specific gravity of the electrolyte in the battery (electrolyte stratification phenomenon: hereinafter referred to as stratification). This is a factor that reduces the battery life.

As a typical lead acid battery for automobiles, a paste-type lead acid battery is used. In a process of producing such a battery, in terms of prevention of falling of a lead paste between production processes (a bonding step, a curing step, an aging step, an assembly step) after the lead paste is applied to a pole plate and workability in battery assembly, a pasting paper mainly composed of a pulp material is used as a support.

However, since the pasting paper mainly composed of a pulp material is decomposed by sulfuric acid as an electrolyte during use of the battery, stratification cannot be inhibited.

Thus, as a method for inhibiting stratification, a nonwoven fabric (pasting mat) that is mainly composed of a microglass fiber which is resistant to sulfuric acid as an electrolyte and that is produced by a wet method is used in place of the pasting paper.

As described above, the pasting mat is a nonwoven fabric that uses a microglass fiber and that is used by being bonded to a pole plate lattice body in application of an active material paste to the pole plate lattice body in the process of producing a battery pole plate for the purpose of preventing falling of the active material paste from the pole plate lattice body. An ultrathin (thickness: 0.1 mm or less) pulp pasting paper has heretofore been used, but in recent years, not only for preventing falling of the active material but also for enhancing the battery performance, a mat material (pasting mat) using a microglass fiber has been used in place of the pasting paper.

Lead acid batteries for automobiles have been subjected to severe cost competition, and it is essential to improve the takt time in battery production. Thus, it is required also for the pasting mat to increase the strength.

In general, in a nonwoven fabric using a microglass fiber (AGM: absorbent glass mat) which is a separator for a lead acid battery, the tensile strength (sheet strength) can be improved by using a heat-fusible binder fiber.

PTL 1 states that a PET/PE core/sheath type, a pulped PE fiber, a copolymerized PET fiber (CoPET all-fusion type), or a combination thereof is used as a heat-fusible binder fiber to improve the tensile strength and the gear sealing.

PTL 2 states that a core/sheath type such as PET/CoPET, PP/PE, PET/PE, or PET/CoPET, is used as a heat-fusible binder fiber to improve the tensile strength of a nonwoven fabric and to inhibit variation in air permeability.

PTL 3 states that a CoPET all-fusion type or a PET/CoPET core/sheath type is used as a heat-fusible binder fiber to improve the tensile strength and cuttability of a nonwoven fabric.

Thus, in an AGM separator using a microglass fiber which is a separator for a lead acid battery, improvement of the tensile strength by using various heat-fusible binder fibers is common, and also in a pasting mat using a microglass fiber, such a heat-fusible binder fiber is used.

In general, as for the thickness of a pasting mat to be used in a lead acid battery, one having a thickness of 0.1 mm or more is used from the viewpoint of the tensile strength (sheet strength) of the pasting mat and inhibition of stratification of the electrolyte. On the other hand, the distance between pole plates in designing of a lead acid battery is fixed in consideration of the effect on the charging/discharging reaction, and therefore, it is necessary to reduce the thickness of a separator to be used for isolating the pole plates according to the thickness of the pasting mat, and there was a problem from the viewpoint of inhibition of stratification of the electrolyte.

Therefore, in order to inhibit the deterioration in the charging/discharging reaction of the lead acid battery, the thickness of the pasting mat is desirably thinner to such an extent that the stratification of the electrolyte can be inhibited.

In general, an AGM separator is used before assembly of a battery (insertion into a battery jar). A pasting mat is used in application of an active material paste to a pole plate lattice body. This is then subjected to a pole plate curing step and a pole plate aging step, followed by incorporation into a battery together with the separator.

In a pasting mat using a heat-fusible binder fiber, a problem such as an embossing failure in stacking of pole plates in a pole group assembly step due to bonding of the front surface and the back surface of pasting mats of superposed pole plates, or impairment of the effect of the pasting mat itself due to top layer delamination of the pasting mat sometimes occurred.

In addition, in general, a pasting mat to be used in a lead acid battery is delivered in a state wound into a roll, and also when it was unwound and used, the top layer delamination sometimes occurred due to bonding of the front surface and the back surface, leading to a problem.

The phenomenon that bonding of the front and back surfaces occurs in unwinding a pasting mat is considered to be influenced by the winding pressure of the pasting mat and the temperature/humidity environment (conditions) from the product transportation to storage and the actual use of the product in battery production.

In general, a nonwoven fabric including a pasting mat to be used in a lead acid battery is delivered in a state wound into a roll, and a pressure of 5 kPa or more is applied in winding into the roll for preventing disintegration of the wound state.

In transportation, the nonwoven fabric may be subjected to extended transport in a container, and depending on the destination, may cross the equator, and thus be subjected to high temperature and high humidity conditions. The temperature in a container near the equator is said to be increased to 70°C.

In addition, it is needless to say that in the storage state in battery manufacturers, the temperature/humidity environment (conditions) obviously largely differs depending on the region and company.

Furthermore, in use of a pasting mat, the pasting mat is used in application of an active material paste to a pole plate lattice body, and then, the pole plates are stacked so that the pasting mats are superposed on each other, and are transferred to an aging step. The load applied to the pasting mats at this time is 10 kPa or more. In the aging step, the pasting mats are treated under conditions of a temperature of at most 90°C and a humidity of at most 95% (see, for example, JP-A-2018-133135).

Citation List

Patent Literature

PTL 1: Japanese Patent No. 5160285
PTL 2: Japanese Patent No. 6518094
PTL 3: JP-A-2018-37335

Summary of Invention

Technical Problem

The present invention has been made in view of the above situation, and an object of the present invention is to provide a nonwoven fabric (pasting mat) that does not undergo delamination due to bonding between the nonwoven fabrics (pasting mats) even under severe conditions (a pressure in winding, a high temperature and a high humidity in transportation, storage, and production), and has a small thickness in order to inhibit the deterioration in the charging/discharging reaction of a lead acid battery.

Solution to Problem

As a result of extensive and intensive studies for solving the above problem, the nonwoven fabric (pasting mat) for lead acid batteries of the present invention is a nonwoven fabric (pasting mat) for lead acid batteries having the following features.

(1) A nonwoven fabric (pasting mat) for lead acid batteries, containing a microglass fiber and a heat-fusible binder fiber, wherein the nonwoven fabric has a thickness under a pressure of 20 kPa of 0.02 mm or more and less than 0.1 mm, and has a bonding strength between the pasting mats after being left for 48 hours under a pressure of 5 to 10 kPa in an environment of a temperature of 70 to 90°C and a humidity of 75% of less than 0.05 N.

(2) The nonwoven fabric (pasting mat) for lead acid batteries according to the above (1), wherein the bonding strength between the pasting mats after being left for 48 hours under a pressure of 5 kPa in an environment of a temperature of 70°C and a humidity of 75% is less than 0.05 N.

(3) The nonwoven fabric (pasting mat) for lead acid batteries according to the above (1), wherein the bonding strength between the pasting mats after being left for 48 hours under a pressure of 10 kPa in an environment of a temperature of 70°C and a humidity of 75% is less than 0.05 N.

(4) The nonwoven fabric (pasting mat) for lead acid batteries according to the above (1), wherein the bonding strength between the pasting mats after being left for 48 hours under a pressure of 10 kPa in an environment of a temperature of 90°C and a humidity of 75% is less than 0.05 N.

(5) The nonwoven fabric (pasting mat) for lead acid batteries according to any one of the above (1) to (4), wherein the pasting mat has a tensile strength of 5 N/10 mm$^2$ or more.

(6) The nonwoven fabric (pasting mat) for lead acid batteries according to any one of the above (1) to (5), wherein the heat-fusible binder fiber is an organic fiber having a core/sheath structure with a sheath of a crystalline heat-fusible polyolefin resin or a crystalline heat-fusible polyester resin.

(7) The nonwoven fabric (pasting mat) for lead acid batteries according to any one of the above (1) to (6), wherein the heat-fusible binder fiber has a fineness of 2.2 dtex or less.

(8) The nonwoven fabric (pasting mat) for lead acid batteries according to any one of the above (1) to (7), wherein the nonwoven fabric is a wound body wound with a pressure of 5 kPa or more applied.

(9) The nonwoven fabric (pasting mat) for lead acid batteries according to any one of the above (1) to (8), wherein the heat-fusible binder fiber is contained in an amount of 3.0% by weight or more.

(10) The nonwoven fabric (pasting mat) for lead acid batteries according to any one of the above (1) to (9), wherein the microglass fiber has a number average fiber diameter of 4.5 um or less.

(11) The nonwoven fabric (pasting mat) for lead acid batteries according to any one of the above (1) to (10), wherein the microglass fiber has a number average fiber diameter of 2 um or less.

(12) The nonwoven fabric (pasting mat) for lead acid batteries according to any one of the above (1) to (11), wherein the microglass fiber and the heat-fusible binder fiber are contained in a total amount of 60% by weight or more.

(13) A lead acid battery using the nonwoven fabric (pasting mat) for lead acid batteries according to any one of the above (1) to (12).

Advantageous Effects of Invention

It is possible to provide a nonwoven fabric (pasting mat) that does not undergo delamination due to bonding between the nonwoven fabrics (pasting mats) even under such severe conditions as described above (a pressure in winding, a high temperature and a high humidity in transportation, storage, and production).

Description of Embodiments

The nonwoven fabric (pasting mat) for lead acid batteries of the present invention is obtained by wet-papermaking using a microglass fiber and a heat-fusible binder fiber as main components, and may contain, in addition to the microglass fiber and the heat-fusible binder fiber, an inorganic powder such as silica, or a non-heat-fusible organic fiber or resin such as a cellulose, a carbon fiber, a polyacrylonitrile fiber, or a non-heat-fusible polyester fiber, each of which is excellent in acid resistance and oxidation resistance.

When a non-heat-fusible monofilament organic fiber is blended together with the heat-fusible binder fiber, the compression breaking strength (shearing force) of the nonwoven fabric (pasting mat) can be increased (see, for example, Japanese Patent No. 4261821), which makes it possible to obtain a further superior nonwoven fabric (pasting mat).

Besides, a combined effect of various combinations with a non-heat-fusible material can also be expected.

As the microglass fiber used for the nonwoven fabric (pasting mat) for lead acid batteries of the present invention, a C glass fiber is preferred since the nonwoven fabric is used in sulfuric acid as with a separator for lead acid batteries, but the microglass fiber is not limited to the C glass fiber as long as it is an acid-resistant glass fiber.

The fiber diameter of the microglass fiber varies depending on the combined heat-fusible binder fiber or other auxiliary materials, but from the viewpoint of stratification inhibition which is the function of the pasting mat, the number average fiber diameter is preferably 4.5 um or less. When the stratification inhibition needs to be further improved, for example, because of use in a lead acid battery for ISS, the number average fiber diameter is preferably 2 um or less.

Examples of synthetic resin components of the heat-fusible binder fiber used for the nonwoven fabric (pasting mat) for lead acid batteries of the present invention include synthetic resins, for example, polyolefin resins such as a polyethylene resin and a polypropylene resin, a polystyrene resin, a polymethyl methacrylate resin, a polyacrylonitrile resin, a nylon resin, a polyester resin, and a polyfluoroethylene resin. Those to serve as heat-melting components among the above resins are polyolefin resins such as a polyethylene resin and a polypropylene resin, and a polyester resin which is heat fusible.

In the present invention, from the viewpoint of an improving effect on the tensile strength (sheet strength), a heat-fusible resin having a highly crystalline structure, for example, a polyolefin resin such as a polyethylene resin or a polypropylene resin, or a low-melting-point crystalline polyester resin is preferably used, and a polyethylene resin is more preferred.

In the case of a non-crystalline heat-fusible resin such as a modified polyethylene resin or a modified polyester resin, specifically, a polyethylene copolymer (CoPE) or a copolymerized polyethylene terephthalate (CoPET), the adhesiveness is too high, and therefore, bonding between the surfaces of the superposed nonwoven fabrics (pasting mats) occurs under a pressure in winding or under conditions of a high temperature and a high humidity in transportation, storage, and production, causing a problem such as top layer delamination of the nonwoven fabric (pasting mat) in peeling, and thus, such a resin is not preferred.

Regarding the fiber diameter of the heat-fusible binder fiber, since the number of heat-fusible binder fibers contained in the nonwoven fabric (pasting mat) decreases as the fiber diameter increases, a heat-fusible binder fiber having a fineness of 2.2 dtex or less is preferred from the viewpoint of tensile strength.

The heat-fusible binder fiber used for the nonwoven fabric (pasting mat) for lead acid batteries of the present invention is preferably one having a core/sheath structure because of its high improving effect on the tensile strength (sheet strength).

In this case, the core may be a generally used resin such as a polyethylene resin, a polypropylene resin, or a polyester resin, but is preferably an acid-resistant one having a melting point of 160°C or higher.

The sheath is preferably a crystalline heat-fusible resin, for example, a polyolefin resin such as a polyethylene resin or a polypropylene resin, a low-melting-point crystalline polyester resin, or the like. In the case of a polyolefin resin or a modified polyester resin which is a non-crystalline heat-fusible resin, specifically, a polyethylene copolymer (CoPE) or a copolymerized polyethylene terephthalate (CoPET), the adhesiveness is too high, and therefore, bonding between the surfaces of the superposed nonwoven fabrics (pasting mats) occurs under a pressure in winding or under conditions of a high temperature and a high humidity in transportation, storage, and production, causing a problem such as top layer delamination of the nonwoven fabric (pasting mat) in peeling, and thus, such a resin is not preferred.

In the nonwoven fabric (pasting mat) for lead acid batteries of the present invention, the amount of the heat-fusible binder fiber blended is preferably 3.0% by weight or more, more preferably 5.0% by weight or more, and still more preferably 12% by weight or more.

When the amount thereof is less than 3.0% by weight, the tensile strength (sheet strength) of the nonwoven fabric (pasting mat) is insufficient.

The amount of the heat-fusible binder fiber blended is preferably 40% by weight or less, more preferably 30% by weight or less, and still more preferably 25% by weight or less.

When the amount thereof is more than 40%, the ability to hold the electrolyte decreases, and sulfuric acid released from a pole plate in charging cannot be held, causing stratification of the electrolyte.

In the nonwoven fabric (pasting mat) for lead acid batteries of the present invention, the total amount of the microglass fiber and the heat-fusible binder fiber blended is preferably 60% by weight or more, more preferably 65% by weight or more, and still more preferably 70% by weight or more.

In the nonwoven fabric (pasting mat) for lead acid batteries of the present invention, the thickness of the nonwoven fabric (pasting mat) is preferably 0.02 or more and less than 0.1 mm, and more preferably 0.03 or more and less than 0.1 mm.

When the thickness of the nonwoven fabric (pasting mat) is less than 0.02 mm, an active material penetrates into the pasting mat to be used in application of the active material to the pole plate lattice body, so that it does not substantially have a layer that holds the electrolyte, and therefore, a function to inhibit stratification significantly deteriorates. Thus, in the current ISS use environment, the thickness of the nonwoven fabric (pasting mat) is desirably 0.02 mm or more.

In addition, when the thickness is less than 0.02 mm, it is necessary to increase the blending ratio of the heat-fusible binder fiber for maintaining the tensile strength (sheet strength), and the density of the heat-fusible binder fiber contained in the nonwoven fabric (pasting mat) also increases, and therefore, the number of heat-fusible binder fibers placed on the surface of the nonwoven fabric (pasting mat) also increases. As a result, the number of bonding intersections of the heat-fusible binder fibers when the nonwoven fabrics are superposed also significantly increases, and therefore, surface delamination is more likely to occur, and thus, the thickness of the nonwoven fabric (pasting mat) is desirably 0.02 mm or more.

On the other hand, in a general lead acid battery for automobiles, since the distance between the positive electrode and the negative electrode (pole gap) is about 1.5 mm or less, a too large thickness of the nonwoven fabric (pasting mat) makes it difficult to use a separator. Thus, the thickness needs to be reduced to less than 0.1 mm.

In addition, since the pole gap is 1.0 mm or less in recent lead acid batteries for automobiles, the thickness of the nonwoven fabric (pasting mat) is desirably 0.02 mm or more and less than 0.1 mm. Furthermore, when considering the penetration of the active material into the nonwoven fabric (pasting mat) in application of the active material to the pole plate, the thickness of the nonwoven fabric (pasting mat) is desirably 0.03 mm or more and less than 0.1 mm.

In the nonwoven fabric (pasting mat) for lead acid batteries of the present invention, in order to use it in a general battery production process without any problems, the tensile strength (sheet strength) of the nonwoven fabric (pasting mat) is preferably 2.5 N/10 mm$^2$ or more, and from the viewpoint of improving the productivity in the future, the tensile strength is desirably 5.0 N/10 mm$^2$ or more, and more desirably 7.5 N/10 mm$^2$ or more.

When the tensile strength is lower than 2.5 N/10 mm$^2$, the battery assembly performance and the basic physical properties in charging/discharging reaction deteriorate, and the battery life decreases.

In the nonwoven fabric (pasting mat) for lead acid batteries of the present invention, from the viewpoint of inhibition of stratification of the electrolyte, the maximum pore size of the nonwoven fabric (pasting mat) is preferably less than 100 $\mu$m, and more preferably 40 um or less.

In the nonwoven fabric (pasting mat) for lead acid batteries of the present invention, the coefficient of extension of the nonwoven fabric (pasting mat) is preferably in the range of 2.0% or more and less than 9.0%, and more preferably in the range of 2.5% or more and 7.5% or less.

In the charging/discharging reaction during use of a lead acid battery, absorption and release of the electrolyte are repeated, and therefore accompanied by expansion and contraction of the nonwoven fabric (pasting mat).

In addition, the nonwoven fabric (pasting mat) for lead acid batteries is delivered mainly in a roll shape in delivery, and the nonwoven fabric (pasting mat) is pulled from the roll and used when assembling a battery. Thus, when the coefficient of extension of the nonwoven fabric (pasting mat) for lead acid batteries as measured under a room temperature condition is 9.0% or more, the nonwoven fabric (pasting mat) for lead acid batteries is extended by a force when pulling out the nonwoven fabric (pasting mat) for lead acid batteries and the dimensions in the width direction and the thickness direction of the nonwoven fabric (pasting mat) are changed.

In this case, the distance between pole plates and the size thereof set for preventing the short-circuiting on the side surface of the battery electrodes change, causing an early battery short-circuiting.

In the case where the coefficient of extension is less than 2.0% when the nonwoven fabric (pasting mat) is pulled from the roll and is used in assembling a battery, cracking occurs in the nonwoven fabric (pasting mat), resulting in a defective product which cannot be delivered.

Examples

The present invention will be described more specifically below with reference to Examples, Reference Examples, and Comparative Examples, but the present invention is not to be limited to the following Examples without departing from the gist thereof.

Nonwoven fabrics (pasting mats) for lead acid batteries of Examples 1 to 17, Reference Examples 1 to 2, and Comparative Examples 1 to 14 were produced using the following raw materials.

[Blended Raw Materials]

(1) Microglass fiber

CMLF-208, manufactured by Nippon Sheet Glass Co., Ltd., number average fiber diameter: 0.8 um

(2) Non-adhesive monofilament organic fiber

EP133-5, manufactured by Kuraray Co., Ltd., polyethylene terephthalate, fineness: 1.45 dtex

(3) Heat-fusible binder fiber

A: Melty 6080, manufactured by UNITIKA LTD., two-component core/sheath type (core: polyethylene terephthalate, sheath: polyethylene), fineness: 1.50 dtex

B: PZ08-5, manufactured by Daiwabo Holdings Co., Ltd., one-component all-fusion type (polypropylene), fineness: 0.80 dtex

C: Casven 8080, manufactured by UNITIKA LTD., two-component core/sheath type (core: polyethylene terephthalate, sheath: polyethylene terephthalate), fineness: 1.10 dtex

D: RCE 1.7, manufactured by UBE Corporation, two-component core/sheath type (core: polypropylene, sheath: low-melting-point polyethylene), fineness: 1.70 dtex

E: Melty 4000, manufactured by UNITIKA LTD., one-component all-fusion type (copolymerized polyethylene terephthalate), fineness: 2.20 dtex

F: Melty 4080, manufactured by UNITIKA LTD., two-component core/sheath type (core: polyethylene terephthalate, sheath: copolymerized polyethylene terephthalate), fineness: 1.22 dtex

[Production of Nonwoven Fabric (Pasting Mat)]

The nonwoven fabrics (pasting mats) for lead acid batteries of Examples 1 to 17, Reference Examples 1 to 2, and Comparative Examples 1 to 14 were produced by the following procedure according to the formulation shown in Tables 1 to 2.

About 7 to 10 g of the raw materials were put in a container of an industrial mixer (MX-152SP, manufactured by Panasonic Corporation), about 1000 mL of an aqueous sulfuric acid solution of pH 3 was added thereto, and the mixture was subjected to disaggregation (rotation speed: about 9700 rpm) for 60 seconds. The liquid sample in a slurry form was put in a square sheet machine for experiments. An aqueous sulfuric acid solution of pH 3 was further added thereto and the mixture was uniformly stirred so as to obtain a concentration of 0.25% by weight, and the resultant was formed into a sheet. The sheet was dried by heating at a temperature of 180°C for 30 minutes using a box dryer, thereby producing a nonwoven fabric (pasting mat) for lead acid batteries. In drying the sheet, attention was paid so that water vapor did not remain in the dryer.

[Methods for Test and Evaluation]

For the Examples, Reference Examples, and Comparative Examples, evaluation was performed under the following conditions. The results are collectively shown in Tables 1 to 2.

(1) Weight (g/m$^2$)

The produced nonwoven fabric (pasting mat) was cut into a size of 100 mm × 100 mm to form a test piece. The weight of ten such test pieces was measured with an electronic balance and the weight (g/m$^2$) was calculated.

(2) Thickness (mm)

The produced nonwoven fabric (pasting mat) was cut into a size of 100 mm × 100 mm to form a test piece. Ten such test pieces were stacked, and measurement was performed with the "thickness measuring tool" shown in Fig. 1 in Standard of Battery Association of Japan SBA S 0406-2017 7.2.2.b) for AGM separator for lead acid battery.

(3) Apparent density (g/cm$^3$)

Measurement was performed according to the method described in Standard of Battery Association of Japan SBA S 0406-2017 7.2.3 for AGM separator for lead acid battery, and the apparent density was calculated according to the following calculation formula.

$$\text{Apparent density (g/cm}^3\text{)} = [\text{weight (g/m}^2\text{)}] / [\text{thickness (mm)}] / 1000$$

(4) Tensile strength (N/10 mm$^2$)

Measurement was performed by the following procedure according to the method described in Standard of Battery Association of Japan SBA S 0406-2017 7.2.7 for AGM separator for lead acid battery.

The produced nonwoven fabric (pasting mat) was cut into a size of 10 mm × 70 mm to form a test piece. Measurement with a tensile tester (chuck distance: 50 mm, tension rate: 200 mm/min) was repeated 10 times, and the average was calculated and taken as the tensile strength (N/mm$^2$).

(5) Bonding strength (N)

a. As testing conditions, three pattens: "left for 48 hours under conditions of a temperature of 70°C, a humidity of 75%, and a pressure of 5 kPa", "left for 48 hours under conditions of a temperature of 70°C, a humidity of 75%, and a pressure of 10 kPa", and "left for 48 hours under conditions of a temperature of 90°C, a humidity of 75%, and a pressure of 10 kPa" were employed.

b. The produced nonwoven fabric (pasting mat) was cut (5 kPa pressure: 100 mm × 100 mm, 10 kPa pressure: 70 mm × 70 mm) to form a sample (each set included two sheets).

c. As a pretreatment, the samples (two sheets for each set) were left for one hour in a constant temperature and humidity chamber set to the same temperature and humidity conditions as the testing conditions.

d. The pretreated samples (two sheets for each set) were interposed between two sheets of fine paper (cut into the same size as the samples), and the resultant was further interposed between two acrylic boards (120 mm × 120 mm × 10 mm thickness), and then, the resultant was placed in a constant temperature and humidity chamber set to the same temperature and humidity conditions as the testing conditions. A prescribed weight (5 kPa pressure: 5 Kg, 10 kPa pressure: 10 Kg) was placed on the acrylic board.

e. After being left for 48 hours, the samples were taken out from the constant temperature and humidity chamber, and the bonding strength was measured.

f. The bonding strength was measured as follows according to the "Touch and Close Fastener 7.4.2 Peeling Strength" in JIS L 3416:2000.

A test piece of 25 mm width while remaining in the bonded state was collected from the treated sample, and the "bonding strength" of a 50-mm bonded part was measured with an autograph (manufactured by Shimadzu Corporation). The maximum value was taken and the average of the results of six measurements in total was determined.

When the bonded state could not be maintained until the test piece was attached to the grip, the "bonding strength" was determined to be "0.00".

(6) Top layer delamination ("none", "scuffing", "delamination")

The state of the top layer delamination was determined by visually checking whether scuffing or top layer delamination occurred on the surface of either sample when peeling the samples (two sheets for each set) in a bonded state by hands.

When a piliform state as formed by rubbing was found on the surface of either nonwoven fabric (pasting mat), the state was determined to be "scuffing".

When a peeled and detached part was found on the surface of either nonwoven fabric (pasting mat), the state was determined to be "delamination".

When neither "scuffing" nor "delamination" was found, the state was determined to be "none".

Such evaluation results of Examples 1 to 17, Reference Examples 1 to 2, and Comparative Examples 1 to 14 are collectively shown in Tables 1 to 2.

[Table 1]

| Item | Manufacturer | Material (glass) | Product (Fiber diameter 0.8 μm) | Fiber diameter (dtex) | Unit | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 |
|---|---|---|---|---|---|---|---|---|---|---|---|---|---|---|---|---|---|---|---|---|---|---|
| Non-adhesive fiber (C glass short fiber) | Kuraray | PET | EP133-5 | 1.45 | wt% | 97 | 95 | 90 | 88 | 85 | 83 | 75 | 70 | 70 | 70 | 70 | 60 | 75 | 75 | 75 | 70 | 50 |
| | UNITIKA | PET/PE | 6080 | 1.50 | wt% | 3 | 5 | 10 | 12 | 15 | 17 | 25 | 30 | 30 | 30 | 30 | 40 | | | | 10 | 30 |
| Heat-fusible binder fiber | Daiwabo | PP | P208-5 | 0.80 | wt% | | | | | | | | | | | | | | | | 20 | 20 |
| | UNITIKA | PET/PET | Casven 8080 | 1.10 | wt% | | | | | | | | | | | | | 25 | | | | |
| | UBE | PP/PE | RCE 1.7 | 1.70 | wt% | | | | | | | | | | | | | | 25 | | | |
| | UNITIKA | Co-PET | 4000 | 2.20 | wt% | | | | | | | | | | | | | | | 25 | | |
| | UNITIKA | PET/coPET | 4080 | 1.22 | wt% | | | | | | | | | | | | | | | | | |
| Raw material disaggregation — Concentration | | | | | wt% | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 |
| pH | | | | | — | 3 | 3 | 3 | 3 | 3 | 3 | 3 | 3 | 3 | 3 | 3 | 3 | 3 | 3 | 3 | 3 | 3 |
| Papermaking condition — Time | | | | | sec | 60 | 60 | 60 | 60 | 60 | 60 | 60 | 60 | 60 | 60 | 60 | 60 | 60 | 60 | 60 | 60 | 60 |
| pH | | | | | — | 3 | 3 | 3 | 3 | 3 | 3 | 3 | 3 | 3 | 3 | 3 | 3 | 3 | 3 | 3 | 3 | 3 |
| Drying conditions — Temperature | | | | | °C | 180 | 180 | 180 | 180 | 180 | 180 | 180 | 180 | 180 | 180 | 180 | 180 | 180 | 180 | 180 | 180 | 180 |
| Time | | | | | min | 30 | 30 | 30 | 30 | 30 | 30 | 30 | 30 | 30 | 30 | 30 | 30 | 30 | 30 | 30 | 30 | 30 |
| Weight | | | | | g/m² | 15 | 14 | 17 | 15 | 13 | 14 | 16 | 6 | 8 | 12 | 14 | 15 | 15 | 14 | 13 | 15 | 17 |
| Thickness under 20 kPa | | | | | mm | 0.08 | 0.07 | 0.09 | 0.08 | 0.06 | 0.07 | 0.08 | 0.02 | 0.03 | 0.05 | 0.06 | 0.07 | 0.07 | 0.08 | 0.07 | 0.08 | 0.09 |
| Apparent density | | | | | g/cm³ | 0.19 | 0.20 | 0.19 | 0.19 | 0.22 | 0.20 | 0.20 | 0.30 | 0.27 | 0.24 | 0.23 | 0.21 | 0.21 | 0.18 | 0.19 | 0.19 | 0.19 |
| Tensile strength | | | | | N/10mm² | 3.3 | 6.2 | 8.1 | 9.0 | 10.3 | 12.0 | 12.2 | 12.9 | 13.1 | 13.2 | 17.7 | 19.9 | 3.3 | 14.1 | 8.9 | 12.0 | 12.3 |
| Top layer delamination 70°C×75%×48 hr 5 kPa | | | | | Visual observation | none | none | none | none | none | none | none | none | none | none | none | none | none | none | none | none | none |
| Bonding strength | | | | | N | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| Top layer delamination 70°C×75%×48 hr 10 kPa | | | | | Visual observation | none | none | none | none | none | none | none | scuffing | none | none | none | none | scuffing | none | none | none | none |
| Bonding strength | | | | | N | 0.00 | 0.00 | 0.00 | 0.00 | 0.00 | 0.00 | 0.00 | 0.02 | 0.00 | 0.00 | 0.00 | 0.00 | 0.02 | 0.00 | 0.00 | 0.00 | 0.00 |
| Top layer delamination 90°C×75%×48hr 10 kPa | | | | | Visual observation | none | none | none | none | none | none | none | scuffing | none | none | none | scuffing | scuffing | none | none | none | scuffing |
| Bonding strength | | | | | N | 0.00 | 0.00 | 0.00 | 0.00 | 0.00 | 0.00 | 0.00 | 0.02 | 0.00 | 0.00 | 0.00 | 0.02 | 0.04 | 0.00 | 0.00 | 0.00 | 0.03 |

[Table 2]

| No. | Item | Product / Fiber | Fiber diameter (dtex) | Unit | Reference Example 1 | Reference Example 2 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|---|---|---|---|---|---|---|---|---|---|---|---|
| 1 | | | | | | | | | | | | | | | | | | | | |
| 2 | Non-adhesive fiber — glass — C glass short fiber | C glass EP133-5, Fiber diameter 0.8 μm | — | wt% | 100 | 75 | 70 | 70 | 95 | 93 | 90 | 88 | 85 | 75 | 70 | 60 | 95 | 75 | 70 | 50 |
| 3 | Heat-fusible binder fiber — PET | Kuraray 6060 | 1.45 | | | 25 | 30 | 30 | | | | | | | | | | | 10 | 30 |
| 4 | PET/PE | Daiwabo 6060 | 1.50 | | | | | | | | | | | | | | | | | |
| 5 | PP | Daiwabo P208-5 | 0.80 | | | | | | | | | | | | | | | | | |
| 6 | PET/PET | UNITIKA Casven 6060 | 1.10 | | | | | | | | | | | | | | | 25 | | |
| 7 | PP/PE | UBE RCE 1.7 | 1.70 | | | | | | | | | | | | | | | | | |
| 8 | Co-PET | UNITIKA 4000 | 2.20 | | | | | | | | | | | | | | 5 | | | |
| 9 | PET/coPET | UNITIKA 4080 | 1.22 | | | | | | 5 | 7 | 10 | 12 | 15 | 25 | 30 | 40 | | | 20 | 20 |
| 10 | Raw material disaggregation — Concentration | | | wt% | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 |
| 11 | pH | | | — | 3 | 3 | 3 | 3 | 3 | 3 | 3 | 3 | 3 | 3 | 3 | 3 | 3 | 3 | 3 | 3 |
| 12 | Papermaking condition — Time | | | sec | 60 | 60 | 60 | 60 | 60 | 60 | 60 | 60 | 60 | 60 | 60 | 60 | 60 | 60 | 60 | 60 |
| 13 | pH | | | — | 3 | 3 | 3 | 3 | 3 | 3 | 3 | 3 | 3 | 3 | 3 | 3 | 3 | 3 | 3 | 3 |
| 14 | Drying conditions — Temperature | | | °C | 180 | 180 | 180 | 180 | 180 | 180 | 180 | 180 | 180 | 180 | 180 | 180 | 180 | 180 | 180 | 180 |
| 15 | Time | | | min | 30 | 30 | 30 | 30 | 30 | 30 | 30 | 30 | 30 | 30 | 30 | 30 | 30 | 30 | 30 | 30 |
| 16 | Weight | | | g/m³ | 15 | 15 | 15 | 4 | 15 | 15 | 16 | 15 | 17 | 15 | 14 | 13 | 14 | 16 | 30 | 15 |
| 17 | Thickness under 20 kPa | | | mm | 0.08 | 0.08 | 0.01 | 0.015 | 0.09 | 0.08 | 0.07 | 0.08 | 0.09 | 0.07 | 0.08 | 0.06 | 0.07 | 0.09 | 0.08 | 0.07 |
| 18 | Apparent density | | | g/mm³ | 0.19 | 0.20 | 0.30 | 0.27 | 0.19 | 0.19 | 0.23 | 0.19 | 0.19 | 0.21 | 0.18 | 0.22 | 0.20 | 0.18 | 0.18 | 0.21 |
| 19 | Tensile strength | | | N/10mm³ | 2.0 | 1.7 | 18.3 | 17.0 | 7.1 | 8.5 | 9.2 | 10.1 | 11.3 | 14.1 | 14.6 | 25.4 | 6.1 | 11.3 | 12.8 | 13.1 |
| 20 | Top layer delamination 70°C×75%×48 hr 5 kPa | | | Visual observation | none | none | delamination | delamination | delamination | delamination | delamination | delamination | delamination | delamination | delamination | delamination | delamination | delamination | delamination | delamination |
| 21 | Bonding strength | | | N | 0.00 | 0.06 | 0.08 | 0.06 | 0.06 | 0.07 | 0.13 | 0.14 | 0.16 | 0.24 | 0.37 | 0.54 | 0.05 | 0.16 | 0.19 | 0.18 |
| 22 | Top layer delamination 70°C×75%×48 hr 10 kPa | | | Visual observation | none | none | delamination | delamination | delamination | delamination | delamination | delamination | delamination | delamination | delamination | delamination | delamination | delamination | delamination | delamination |
| 23 | Bonding strength | | | N | 0.00 | 0.00 | 0.12 | 0.08 | 0.10 | 0.14 | 0.21 | 0.23 | 0.25 | 0.61 | 0.73 | 0.98 | 0.07 | 0.32 | 0.49 | 0.47 |
| 24 | Top layer delamination 90°C×75%×48 hr 10 kPa | | | Visual observation | none | none | delamination | delamination | delamination | delamination | delamination | delamination | delamination | delamination | delamination | delamination | delamination | delamination | delamination | delamination |
| 25 | Bonding strength | | | N | 0.00 | 0.00 | 0.16 | 0.12 | 0.13 | 0.25 | 0.28 | 0.30 | 0.33 | 0.80 | 0.95 | 1.27 | 0.11 | 0.42 | 0.64 | 0.60 |

As can be seen in the test results of Examples 1 to 17, Reference Examples 1 to 2, and Comparative Examples 1 to 14 shown in Tables 1 to 2, by checking the state after leaving samples for 48 hours in a constant temperature and humidity chamber under conditions of under a pressure of 5 kPa or 10 kPa, a temperature of 70°C or 90°C and a humidity of 75% as bonding conditions between nonwoven fabrics (pasting mats) for the purpose of preventing delamination due to bonding between nonwoven fabrics (pasting mats), the type of the heat-fusible binder fiber that did not undergo top layer delamination in peeling even under the bonding conditions and that gave a bonding strength of less than 0.05 N could be specified.

The top layer of a nonwoven fabric (pasting mat) that showed a bonding strength less than 0.05 N did not undergo "delamination". This is considered because the strength of the bonding is smaller than the strength of the nonwoven fabric (pasting mat) itself so that "delamination" does not occur.

In addition, regarding the case where "scuffing" occurred, the scuffing is considered to have little influence on the battery performance, but a problem may occur in the production process. Thus, no scuffing is more preferred.

From the test results of Examples 1 to 17, Reference Examples 1 to 2, and Comparative Examples 1 to 14 shown in Tables 1 to 2, it could be confirmed that the nonwoven fabric (pasting mat) for lead acid batteries of the present invention does not undergo top layer delamination, which may be caused by bonding between the front and back surfaces of the nonwoven fabrics (pasting mats) even under a pressure by winding and/or under temperature and humidity conditions in transportation, storage, and battery production, and that a nonwoven fabric (pasting mat) that does not cause a defective quality and a production loss can be provided.


**Claims**

1.  A pasting mat for lead acid batteries, comprising a microglass fiber and a heat-fusible binder fiber, wherein the pasting mat has a thickness under a pressure of 20 kPa of 0.02 mm or more and less than 0.1 mm, and has a bonding strength between the pasting mats after being left for 48 hours under a pressure of 5 to 10 kPa in an environment of a temperature of 70 to 90°C and a humidity of 75% of less than 0.05 N.

2.  The pasting mat for lead acid batteries according to claim 1, wherein the bonding strength between the pasting mats after being left for 48 hours under a pressure of 5 kPa in an environment of a temperature of 70°C and a humidity of 75% is less than 0.05 N.

3.  The pasting mat for lead acid batteries according to claim 1, wherein the bonding strength between the pasting mats after being left for 48 hours under a pressure of 10 kPa in an environment of a temperature of 70°C and a humidity of 75% is less than 0.05 N.

4.  The pasting mat for lead acid batteries according to claim 1, wherein the bonding strength between the pasting mats after being left for 48 hours under a pressure of 10 kPa in an environment of a temperature of 90°C and a humidity of 75% is less than 0.05 N.

5.  The pasting mat for lead acid storage batteries according to any one of claims 1 to 4, wherein the pasting mat has a tensile strength of 5 N/10 mm$^2$ or more.

6.  The pasting mat for lead acid batteries according to any one of claims 1 to 5, wherein the heat-fusible binder fiber is an organic fiber having a core/sheath structure with a sheath of a crystalline heat-fusible polyolefin resin or a crystalline heat-fusible polyester resin.

7.  The pasting mat for lead acid batteries according to any one of claims 1 to 6, wherein the heat-fusible binder fiber has a fineness of 2.2 dtex or less.

8.  The pasting mat for lead acid batteries according to any one of claims 1 to 7, wherein the pasting mat is a wound body wound with a pressure of 5 kPa or more applied.

9.  The pasting mat for lead acid batteries according to any one of claims 1 to 8, wherein the heat-fusible binder fiber is contained in an amount of 3.0% by weight or more.

10. The pasting mat for lead acid batteries according to any one of claims 1 to 9, wherein the microglass fiber has a number average fiber diameter of 4.5 um or less.

11. The pasting mat for lead acid batteries according to any one of claims 1 to 10, wherein the microglass fiber has a number average fiber diameter of 2 um or less.

12. The pasting mat for lead acid batteries according to any one of claims 1 to 11, wherein the microglass fiber and the heat-fusible binder fiber are contained in a total amount of 60% by weight or more.

13. A lead acid battery comprising the pasting mat for lead acid batteries according to any one of claims 1 to 12.

## INTERNATIONAL SEARCH REPORT

| International application No. |
| --- |
| **PCT/JP2022/020140** |

### A. CLASSIFICATION OF SUBJECT MATTER

*H01M 4/14*(2006.01)i; *D04H 1/4218*(2012.01)i; *D04H 1/4382*(2012.01)i; *D04H 1/542*(2012.01)i; *H01M 4/20*(2006.01)i
FI:   H01M4/14 Q; D04H1/4382; D04H1/542; D04H1/4218; H01M4/20 Z

According to International Patent Classification (IPC) or to both national classification and IPC

### B. FIELDS SEARCHED

Minimum documentation searched (classification system followed by classification symbols)

H01M4/14; D04H1/4218; D04H1/4382; D04H1/542; H01M4/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2021-68494 A (NIPPON SHEET GLASS CO., LTD.) 30 April 2021 (2021-04-30)<br>claim 1, paragraph [0017], table 1, example 9 | 1-13 |
| A | JP 2007-317405 A (NIPPON SHEET GLASS CO., LTD.) 06 December 2007 (2007-12-06)<br>table 1, comparative example 5 | 1-13 |
| A | JP 2004-535047 A (ATLAS BX CO., LTD.) 18 November 2004 (2004-11-18)<br>claims 1, 3, paragraph [0016] | 1-13 |
| A | JP 2014-530470 A (EXIDE TECHNOLOGIES S.A.U.) 17 November 2014 (2014-11-17)<br>claims 1, 10, paragraph [0022] | 1-13 |
| P, A | WO 2021/171916 A1 (NIPPON SHEET GLASS CO., LTD.) 02 September 2021 (2021-09-02)<br>claims 1-13, paragraph [0017] | 1-13 |

☐ Further documents are listed in the continuation of Box C.   ☑ See patent family annex.

| | |
| --- | --- |
| *   Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **29 June 2022** | **12 July 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/020140**

| Patent document cited in search report | | | Publication date (day/month/year) | Patent family member(s) | | | Publication date (day/month/year) |
|---|---|---|---|---|---|---|---|
| JP | 2021-68494 | A | 30 April 2021 | (Family: none) | | | |
| JP | 2007-317405 | A | 06 December 2007 | (Family: none) | | | |
| JP | 2004-535047 | A | 18 November 2004 | US | 2004/0265699 | A1 | |
| | | | | claims 1, 3, paragraph [0016] | | | |
| | | | | WO | 2003/007404 | A1 | |
| | | | | EP | 1415356 | A1 | |
| | | | | KR | 10-2003-0005759 | A | |
| | | | | CN | 1526177 | A | |
| JP | 2014-530470 | A | 17 November 2014 | US | 2014/0329137 | A1 | |
| | | | | claims 1, 10, paragraph [0022] | | | |
| | | | | WO | 2013/053957 | A1 | |
| | | | | EP | 2768046 | A1 | |
| | | | | CA | 2851161 | A1 | |
| | | | | MX | 2014004385 | A | |
| WO | 2021/171916 | A1 | 02 September 2021 | JP | 6920574 | B1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018133135 A
- JP 5160285 B
- JP 6518094 B
- JP 2018037335 A
- JP 4261821 B